# EUROPEAN PATENT APPLICATION

(11) **EP 2 159 661 A1**
(43) Date of publication of application: **03.03.2010**
(21) Application number: 08380258.7
(22) Date of filing: 29.08.2008
(51) Int. Cl.: G05D 7/01, B05C 5/02

(54) **Flow control device applicable in dispensers**

(71) Applicant: Tecno-Tau Automatitzacions, S.L., 08174 Valldoreix, Barcelona (ES)
(72) Inventor: Sanchez Soler, Josep Miquel, 08174 Valldoreix Barcelona (ES)
(74) Representative: Pons Ariño, Angel

(57) **Abstract**

A flow control device applicable in dispensers comprising a headpiece (1) provided with a body (2) having an inlet (3) wherethrough a filler or such like is introduced at a variable pressure Po and an outlet (4). A moveable rod (5) is disposed inside said body (2), the movable rod (5) is having an extended central body (6), a front end (7) displaying a moveable sector of conical configuration (10) in the interior of the cylindrical outlet (4), and a rear end (8) which moves in a rear housing (9) of the body (1). The flow control device is having as well means for pressure regulation (12) which combined with the geometry of the front end (7) permit the application of the filler or such like with constant flow in a continuous and uniform manner independently of the supply pressure of the product.

## Description

### OBJECT OF THE INVENTION

The invention belongs within the automated devices or machines devised for the application of industrial fillers or such like, more specifically the device of the invention is preferably used to apply a bead of filler in automobile and/or electrical appliance chassis frames or to couple windscreens or glass panes thereto.

The object of this invention consists of the development of a device which permits the application of the filler or such like with a constant flow and/or pressure at the application point in a continuous and uniform fashion.

### BACKGROUND OF THE INVENTION

The current system is composed of pumping equipment, a regulator, hoses and application valve, wherein the pumping equipment propels the material through the hoses until the regulator during the load cycle, and the regulator propels it towards the valve during the application cycle. The system cycle time is the sum of the application time and the load time.

The drawbacks presented by this system are related amongst others with a long system cycle time (loading plus application), as well as with the fact that it is not possible to perform a continuous application and that the quantity of product applied is limited to the capacity of the regulator.

The application of a uniform flow is not possible normally due to variations in the pressure or output flow caused by the loss of load due to friction, length of the hose, application position and instability of the pumping equipment.

The greater the application is (quantity of material), the larger the regulator is (weight and size). The regulators of capacity greater than 10cc are of large size and from 50cc up they are of heavy weight. This does not permit the mounting of the regulators close to the application valves since the large size prevents having a good accessibility to the application points and the heavy weight makes the loading of the regulator on automatic robotised systems impossible.

The programming of these systems (with slow response) is complicated as one must try to perform the application at constant linear velocity of the robot in order to prevent agglomerations or lack of material in the areas that entail changes in velocity such as curves or steps. A reprogramming of robot paths also tends to be complicated and, as a consequence, requires a considerable amount of time.

On the other hand the joints mounted on the regulators can deteriorate easily depending on the type of filler applied (corrosive), which entails a greater maintenance.

The regulators are actuated by servomotor, elements which make the system much more expensive. To the price of the motor one must add the price of the drive necessary for its control, the power hoses and encoder, the space in the cabinet for the drive and its hours of assembly. To the consumption of the motor one must also add the consumption of the refrigerator necessary in the electric cabinet due to the power dissipated by the drive.

### DESCRIPTION OF THE INVENTION

The device of the present invention allows for the resolution of the previously stated problems in a satisfactory manner, guaranteeing at all times the application of the filler with constant flow in a continuous and uniform fashion.

The device fundamentally comprises a filler application headpiece, directly connected to the pumping equipment, a moveable rod in the interior of the body of the headpiece and means to regulate the output flow.

The device is based on the production of a constant output flow which is independent from the pressure variations that may occur at the headpiece inlet. In order to achieve this result the rod which moves in the interior of the body of the headpiece features a specific configuration, so that the difference in diameters resulting from its movement combined with the application of a compensation force or regulation pressure applied on the rod, preferably on the rear end of the rod, permits production of a constant output flow.

This regulation force can be constant and is applied by means of regulating the pressure that could consist, for example, of a manual regulation spring or of a servodrive of pneumatic, hydraulic or mechanical type which permits the dynamic regulation of the pressure or force applied, so that the output flow can respond to a specific pattern or instantaneous order.

The rod features an elongated central body and two ends, one rear end which can be of cylindrical configuration and one front end formed by a sector of truncated conical configuration and/or with escape notches which are preferably found finished off in a sector of cylindrical closure. The body of the headpiece has an inlet opening wherethrough the product to be dispensed is introduced, a rear housing, preferably cylindrical and a through-hole, wherein the rear end of the rod moves and a cylindrical outlet wherein the rear end of the rod moves.

Unlike other regulators, this device considerably improves the productivity in the application of fillers, gels and glues, eliminating the waiting times of the current regulators due to the necessity of reloading.

Likewise, by means of this device a continuous dosage is guaranteed which permits the use of a wide range of products from gases to fillers and in particular products of high viscosity and abrasiveness. Its most significant and differentiating application is the regulation of flow of dense and/or abrasive products which can even require application at high temperatures.

Due to the particular design of the body and of the rod of the device there is no need to use elastic joints, for which reason the friction is reduced, allowing for a range of regulation and high linearity. Likewise, the absence of joints permits its use with high temperature products and, therefore, the heating of the body of the device to high temperatures, including temperatures over 150°C.

On the other hand, the design of the front end of the rod, of a conical shape finished in a sector of cylindrical closure, permits the total closure of the device by shearing of the material, resulting especially useful in products with particles in suspension.

Likewise, the shape of the front end of the rod allows one to work with abrasive products notably extending the useful life of the device, as the material upon flowing produces a correcting/polishing effect on the escape surface without this affecting the behaviour of the device until the entire cylindrical area of the closure sector wears down.

Due to the shape of the front end, if a force is applied on the rod in its closing position, causing it to withdraw a few millimetres from that position, the most external face of that front end performs a suction effect which produces a withdrawal of the product in circulation thus preventing dripping and facilitating its sectioning.

Another of the advantages of the device is that its small volume and weight allow it to be coupled to robotised systems thereby making it possible to increase the application speed due to its smaller inertia, therefore gaining access to a larger number of geometries of application.

On the other hand, maintaining the functional structure of the device without changing its dimensions it is possible to adapt the device to different ranges of flow regulation.

It has been provided that the device can additionally incorporate a nozzle coupled to the body of the headpiece by means whereof it is possible to obtain different modes of application in shape and projection velocity of the product.

### DESCRIPTION OF THE DRAWINGS

In order to complement the description made out and with the object of helping towards a better understanding of the characteristics of the invention, in accordance with a preferred example of practical embodiment thereof, a set of drawing is attached as an integral part of said description, wherein the following, in an illustrative and non-limitative character, has been represented:
Figure 1 shows a schematic view of the device object of this invention in the situation wherein the headpiece is closed and the filler is introduced at a pressure Po.
Figure 2 shows a schematic view of the device in the situation wherein self-regulation is carried out for the production of a flow with constant output.
Figure 3 shows a graphic wherein is observed the variation in the output flow of the device against the variation in the pressure at the inlet for different regulation pressures.

### PREFERRED EMBODIMENT OF THE INVENTION

In view of the figures a preferred embodiment of the device which constitutes the object of this invention is described below.

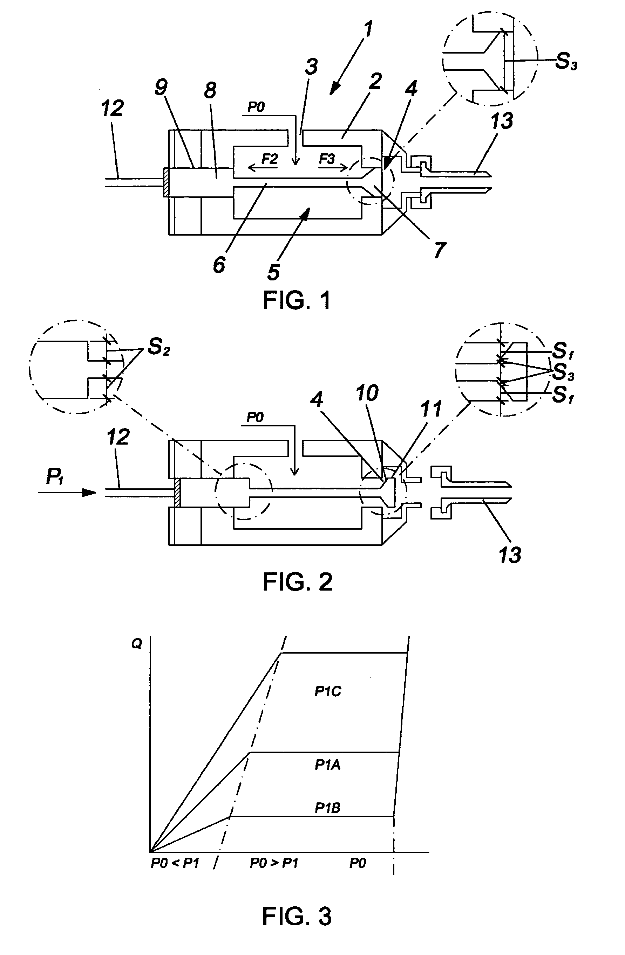

In figure 1, it is observed that the device comprises a headpiece (1) equipped with a body (2) with an inlet (3) wherethrough is introduced at variable pressure Po the filler or such like and an outlet (4) wherethrough the filler is supplied; and a moveable rod (5) in the interior of said body (2) which is equipped with an elongated central body (6), a front end (7) which, depending on its position permits or not the passage of the filler through the outlet (4), and a rear end (8) which moves in a rear housing (9) of the body (1).

As can be observed in said figure 1, the front end (7) of the rod (5) shows a sector of conical configuration (10) finished off in a sector of cylindrical closure (11), and the rear end (8) of the rod (5) features a cylindrical configuration.

The device additionally comprises means of regulation of the pressure (12) coupled on the rear end (8) of the rod (5) which apply a compensation force or regulation pressure P1 on said rod (5).

In figure 1 the situation is observed wherein the nozzle (1) is closed, a supply pressure Po is applied and the regulation pressure P1 exerted by the means of pressure regulation (12) is null. In this case there exists a balance of the forces F2, F3 derived from this supply pressure Po, which are exerted respectively on the free surface S2 of the interior side of the rear end (8) and on the free surface S3 of the front end (7) which is in line with the external mouthpiece of the outlet (4). In this case and due to the fact that S2 = S3 the forces F2 and F3 are equal.

When a regulation pressure P1 is applied on the rod (5), a gradual opening of the outlet (4) is produced which determines a progressive increase in the output flow; in this case, the force F3 exerted on the front end (11) shall be less than force F2 which is exerted in the opposite direction on the rear end (8), due to the fact that when the opening of the outlet (4) is produced the section S3 of the rear end (8) decreases. This situation means that the rod (5) tends to close the outlet (4), for which reason a regulation pressure P1 of suitable value must be applied to maintain an intermediate position of balance or of opening of the rod (5), as can be observed in figure 2, wherein P1=P0 (S2-S3), where S2-S3=Sf or fluid passage area.

In figure 3 it can be observed that for any regulation pressure P1, whether it is P1A, P1B or P1C pre-defined in the device, upon increasing the supply pressure P0 from 0 a gradual increase of output flow Q is achieved, as long as the supply pressure P0 is less than the regulation pressure P1. For variations of the supply pressure P0 superior to the regulation pressure P1 it would cause a movement of the rod (5) in direction of a greater opening increasing the passage area Sf of the fluid, the increase of Sf however would determine a decrease in the pushing force F3 and, therefore, a movement of the rod (5) in the opposite direction, for which reason a positional self-regulation would be produced. Therefore, against any variation in the pressure P0 above the regulation pressure P1 would maintain the balance of the rod (5) and, therefore, the production of a constant outlet flow Q.
As observed in figures 1 and 2, the device can additionally incorporate a nozzle (13) coupled to the body (2) of the headpiece (1).

## Claims

1. Flow control device applicable in dispensers of filler or such like which comprises a headpiece (1) equipped with a body (2) with an inlet (3) wherethrough is introduced the filler or such like at variable pressure Po and an outlet (4) wherethrough the filler is supplied.
**characterised in that** it additionally comprises:
a moveable rod (5) in the interior of said body (2) which is equipped with an extended central body (6), a front end (7) which displays a moveable sector of truncated conical configuration (10) in the interior of the outlet (4), wherein said outlet is of cylindrical configuration, and a rear end (8) which moves in a rear housing (9) of the body (1), and
means of regulation of the pressure or force (12) which apply a regulation pressure or force P1 on said rod (5) for the production of a constant output flow Q against any variation in the supply pressure Po, as long as the supply pressure Po is superior to the regulation pressure P1.

2. Flow control device applicable in dispensers of filler or such like according to claim 1, **characterised in that** following the sector of conical configuration (10) the rod (5) has a sector of cylindrical closure (11).

3. Flow control device applicable in dispensers of filler or such like according to claim 1, **characterised in that** the rear end (8) of the rod (5) features a cylindrical configuration and the rear housing (9) is also cylindrical.

4. Flow control device applicable in dispensers of filler or such like according to claim 1, **characterised in that** the means of regulation (12) is coupled on the rear end (8) of the rod (5).

5. Flow control device applicable in dispensers of filler or such like according to claims 1 or 3, **characterised in that** the rear housing (9) is a through-hole.

6. Flow control device applicable in dispensers of filler or such like according to any of the previous claims, **characterised in that** it additionally comprises a nozzle (13) coupled to the body (2) of the headpiece (1).
